# EUROPEAN PATENT SPECIFICATION

(11) **EP 1 854 581 B1**
(45) Date of publication and mention of the grant of the patent: **21.01.2009**
(21) Application number: 06009663.3
(22) Date of filing: 10.05.2006
(51) Int. Cl.: B23Q 7/04

(54) **Device for gripping and moving a workpiece**
Vorrichtung zum Greifen und Bewegen eines Werkstücks
Dispositif pour saisir et déplacer d une pièce de fabrication

(43) Date of publication of application: 14.11.2007
(73) Proprietor: ME.C.AL. S.p.A., 27030 Frascarolo (PV) (IT)
(72) Inventor: Cavezzale, Ennio, 27030 Frascarolo (PV) (IT); Gili, Renzo, 27030 Frascarolo (PV) (IT)
(74) Representative: Simino, Massimo

(56) References cited:
- DE-A1- 3 721 861
- DE-A1- 3 807 374
- DE-A1- 4 111 596
- DE-A1- 4 232 289
- DE-A1-3102004 007 72
- US-A1- 2004 099 372
- PATENT ABSTRACTS OF JAPAN vol. 008, no. 284 (M-348), 26 December 1984 (1984-12-26) & JP 59 152038 A (TOSHIBA KK), 30 August 1984 (1984-08-30)

## Description

This invention relates to a device for gripping and moving a workpiece according to the pre-characterising clause of claim 1.

The gripping and moving device according to this invention finds application in the gripping and moving of a workpiece comprising two or more components connected at an angle between them by welding, such as for example brackets, frames and the like, the components of which comprise sections of either metal or plastics materials.

In the sector of the manufacture of brackets, for example, means for gripping and moving the brackets and frames between different workstations or within the same workstation are known.

Gripping and moving means of the type mentioned above are used for example to load and present the frames in a correct orientation to the machines cleaning the weld bead in the areas where the sections forming the frames have been welded. It is in fact known that the operation of welding the ends of section members comprising a frame produces a certain amount of excess material, material which necessarily has to be removed in order to obtain clean corners without burrs.

The operation of cleaning the weld bead has to be carried out in the area of the angle joint between the sections forming the frame where the weld between the sections was made. The frame must therefore not only be delivered to the machine which carries out cleaning of the weld bead but also orientated appropriately in such a way that all the corners of the frame are presented in succession.

A device known in the art for gripping and moving a frame comprises a base body movably supported by a longitudinal guide extending along a working axis and a pair of jaws. The jaws are rotatably mounted with respect to the base body about an rotation axis in order to rotate the frame and can move with respect to each other to deliver and release the frame. Suitable actuators and motors are provided to open and close the jaws and to rotate the jaws and therefore the frame with respect to the base body.

Although the gripping and moving means of the type described above make it possible to grip the frame and rotate it, they do not provide any means for knowing the position of the frame relative to the jaws. The jaws are in fact arranged so as to grip a frame member on the outer side and the inner side respectively, and are unable to establish the position of the frame with respect to the jaws.

In order to overcome this disadvantage it is necessary to provide a separate stage of recognition of the spatial position of the frame with respect to the gripping members or jaws. However these operations considerably increase the times for cleaning the weld beads in the corners of each frame and consequently the overall costs of manufacturing the frames.

DE 3807374 forming the base for the preamble of claim 1, describes an universal device for gripping and handling polygonal portions, in particular round hollow bodies with different diameters and heights. The device for handling polygonal portions comprises a base body and gripping means with shafts each facing with respect to the other in order to grip the polygonal portions.

DE 102004007723 describes a gripping device comprising a base body, gripping means associated to said base body and guiding means. The gripping means comprise first, second and third grip arm elements each actuated by servo actuator drive means that move said grip arm elements each other. The grip arm elements are guided on said guiding means.

On the basis of what has been said above there is a need to have means for gripping and moving a workpiece comprising a number of components connected at corners, such as for example frames, through which the workpiece can be gripped, while at the same time performing a function of centering the workpiece with respect to the gripping members or with respect to the base body of the means itself.

The object of this invention is therefore to provide a device for gripping and moving a workpiece, which has structural and functional characteristics which will satisfy the aforesaid requirements and at the same time overcome the disadvantages encountered with respect to the known art.

This object is accomplished by a device for gripping and moving a workpiece according to claim 1.

Further features and advantages of the device for gripping and moving a workpiece according to this invention will be apparent from the following description of a preferred embodiment provided by way of indication and non-restrictively with reference to the appended figures in which:
- Figures 1 to 3 show diagrammatical perspective views of the gripping and moving device according to this invention in different operating configurations,
- Figure 4 shows a diagrammatical view of the device according to this invention during the stage of rotating the frame,
- Figure 5 shows a lateral plan view of the device in Figure 4, and
- Figure 6 shows a plan view from above of the means in Figure 4.

With reference to the appended figures, 1 indicates as a whole a device 1 for gripping and moving a workpiece 30.

Workpiece 30 comprises at least a first member 31 and a second member 32 connected together at an angle to form an inner angle 33 and an outer angle 34 lying in one plane A. Members 31, 32 comprise lengths of conventional sections of metal or plastics material and have an inner side 31a, 32a and an outer side 31b and 32b which identify inner angle 33 and outer angle 34 of corner 35 of workpiece 30. In particular corner 35 constitutes the area of the join between the two members 31, 32 where the weld was made, which is intended to be located in a machine for cleaning the weld bead.

Workpiece 30 may be a frame for brackets or a bracket or any other structure having the abovementioned characteristics.

Purely for the purpose of simplifying the description of this invention, the remainder of the description will refer in a non-restrictive way to a frame, which has to be gripped and orientated in order to offer up the various welded joints in the frame to a machine for cleaning weld beads.

Frame 30 comprises a further member 36, which in the example is connected to the extremity of member 31 opposite that connecting to member 32 in such a way as to form a further corner 37 with member 31.

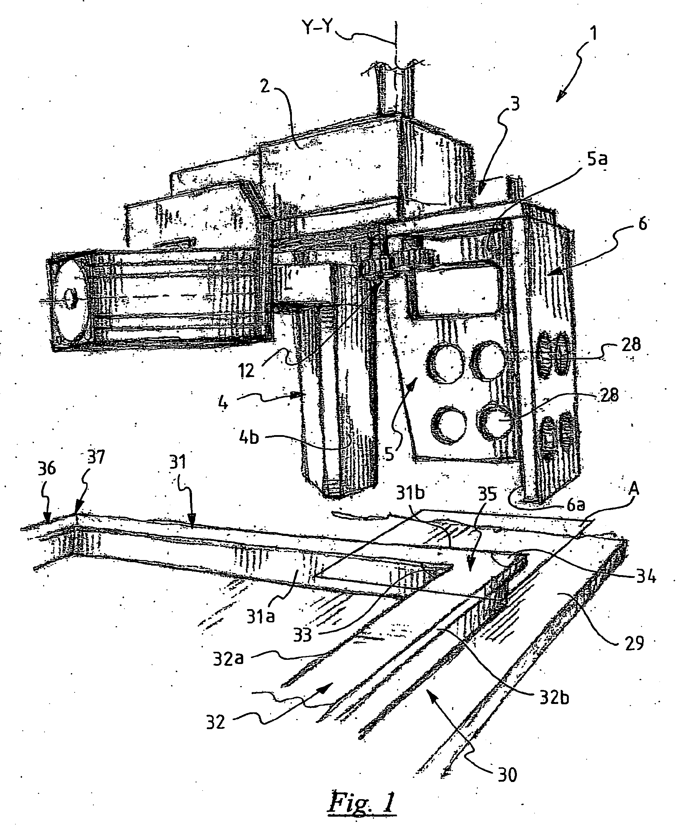

In the example illustrated in Figures 1 to 3, frame 30 is supported by a supporting member 29 lying in a plane parallel to plane A.

Device 1 for gripping and moving frame 30 comprises a base body 2 and gripping means indicated as a whole by 3.

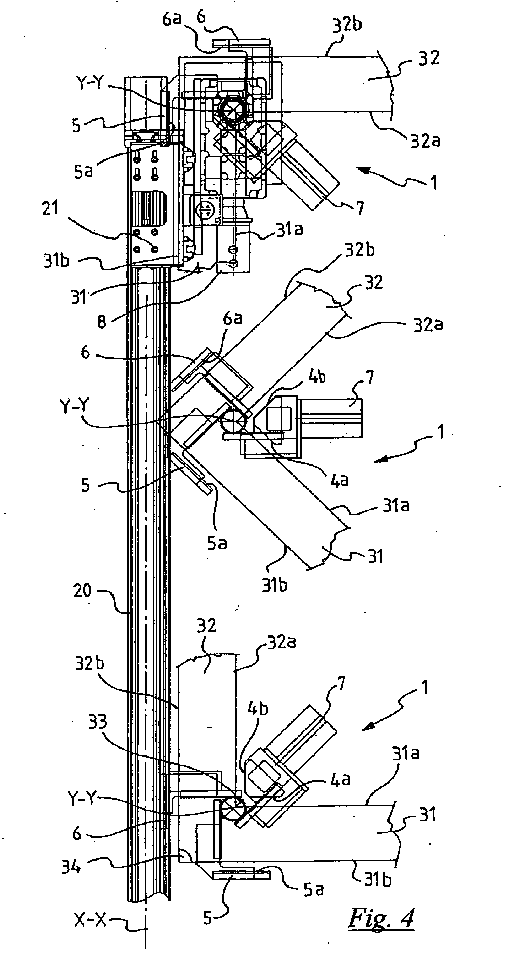

In a manner, which is in itself known, base body 2 is designed to be movably supported by a guide 20 extending longitudinally along an axis X-X (Figure 4). Guide means 21 are provided to movably support base body 2 of device 1 along guide 20. Guide 20 makes it possible to move device 1 from a position in which frame 30 is seized to a working position close to the machine in which the weld beads of the corners of frame 30, in the example corners 35 and 37, are cleaned. Figure 4 shows the various stages of rotating frame 30 about rotation axis Y-Y in succession.

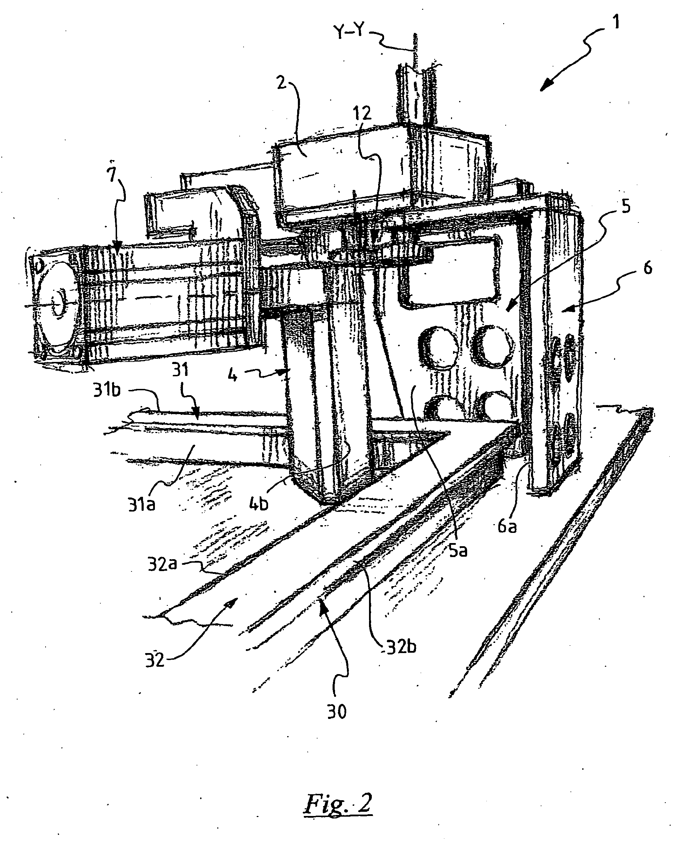

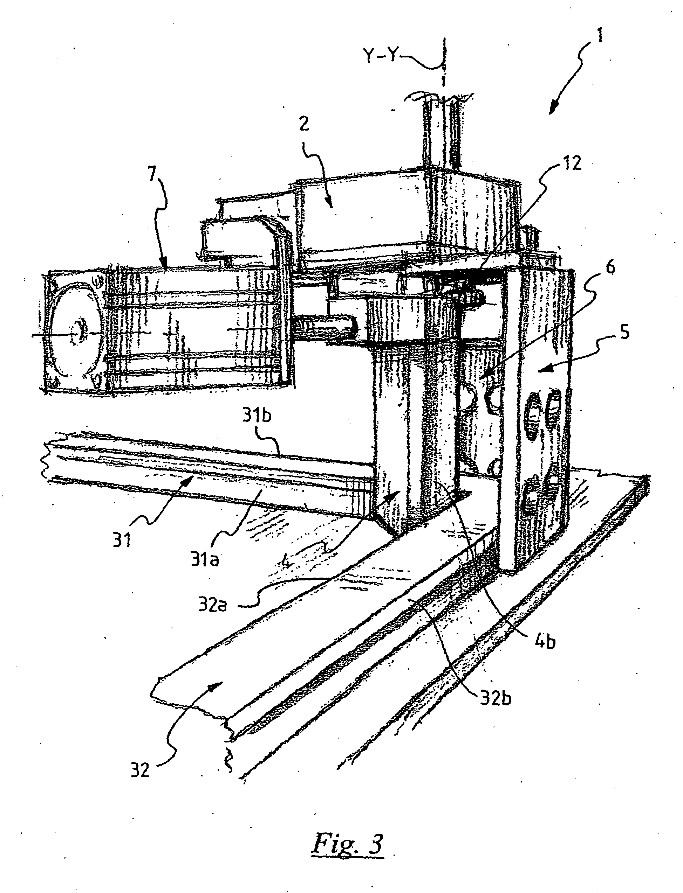

Gripping means 3 are mounted to rotate with respect to base body 2 about a rotation axis Y-Y extending perpendicularly to plane A and can move with respect to each other between a proximal gripping position (Figure 2) and a distal release position (Figure 3).

In the proximal gripping position gripping means 3 grip frame 30 while in the distal position they disengage from frame 30 in order to allow frame 30 to be released.

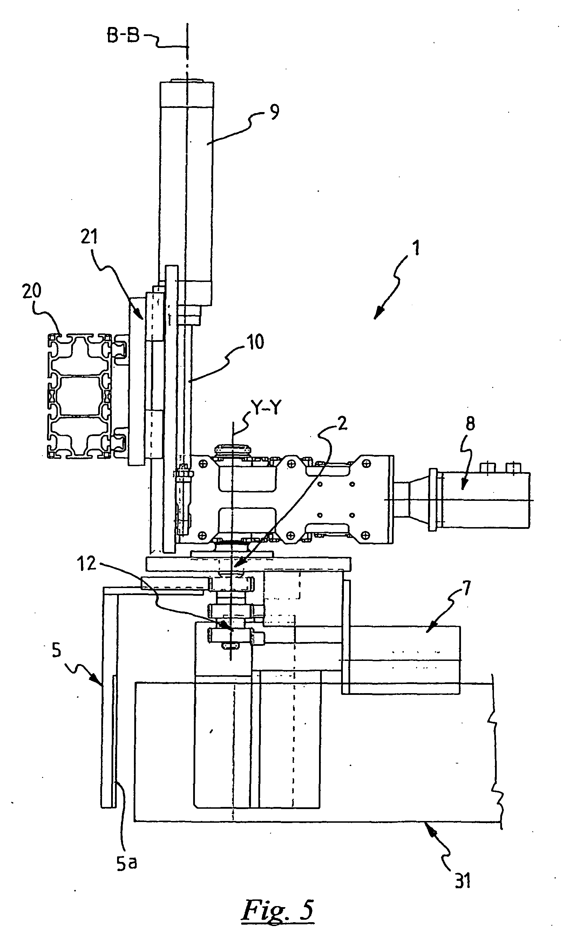

Device 1 also comprises first actuating means 7 to actuate gripping means 3 between the proximal position and the distal position and second actuating means (8) (Figure 5) to rotate gripping means 3 with respect to base body 2 about rotation axis Y-Y.

Advantageously gripping means 3 comprise a first gripping member 4 which can move from the distal position to the proximal position to abut against the inner side 31a of first member 31 and against the inner side 32a of second member 32 of frame 30.

Gripping means 3 also comprise a second gripping member 5 and a third gripping member 6 which can move from the distal position to the proximal position to abut against the outer side 31b of first member 31 and against the outer side 32b of second member 32 respectively.

Substantially, when in the proximal gripping position gripping member 4 abuts against both inner sides 31a, 32a of corner members 31, 32 while gripping members 5, 6 each abut against a corresponding outer side of corner members 31, 32.

For this purpose gripping member 4 has two contact surfaces 4a, 4b which are designed to abut at least partly against the inner sides 31a and 32a of members 31, 32, while gripping members 5, 6 have corresponding contact surfaces 5a, 6a intended to abut at least partly against the outer sides 31b and 32b of members 31, 32.

The action of gripping members 4, 5, 6 on members 31, 32 of frame 30 make it possible to seize or grip frame 30 and above all centre frame 30 with respect to gripping members 4, 5, 6 themselves and base member 2, that is to unequivocally identify the relative position of frame 30 with respect to gripping members 4, 5, 6. This arises from the existence of three gripping members acting on the frame, specifically two gripping members acting on the two adjacent outer sides of the frame and one gripping member acting on the inner part of the aforesaid two sides.

It should be pointed out that in Figure 4 gripping means 3, that is gripping members 4, 5, 6 are shown in a distal position solely for the purpose of simplifying the figures. It is in fact clear that rotation of frame 30 comes about when gripping means 3 grip frame 30.

Gripping members 4, 5 have through holes indicated as a whole by 28, the purpose of which is to discharge the forces acting on gripping members 4, 5.

Advantageously, in the proximal position, first gripping member 4 abuts against the inner sides 31a, 32a of the two members 31, 32 of frame 30 corresponding to inner angle 33. In this way the extension of gripping means 3 is reduced in the proximal gripping position and so also is the overall volume of device 1 as a whole and gripping means 3 in both the proximal and distal positions.

According to a preferred embodiment, first gripping member 4 can move away from and towards second gripping member 5 and third gripping member 6 along a direction perpendicular to the direction of rotation axis Y-Y.

It is further advantageous to make provision in the proximal position for second gripping member 5 and third gripping member 6 to abut against the outer side 31b of first member 31 and against the outer side 32b of second member 32 respectively at outer angle 34.

In the example illustrated in the appended figures, first gripping member 4 comprises a body of frustoconical cross-section with lateral surfaces 4a and 4b. As mentioned, the two lateral surfaces 4a, 4b are designed so that when in the proximal position they at least partly abut against the inner side 31a of first member 31 and against the inner side 32a of second member 32 of frame 30.

Gripping member 4 may advantageously have an angle portion capable of making a shape-locked coupling with the inner angle 33 formed by the two members 32 and 33 of frame 30.

Second gripping member 5 and third gripping member 6 each comprise a jaw extending in a predominant direction parallel to rotation axis Y-Y and capable of moving away from and towards first gripping member 4 along a direction perpendicular to the direction of rotation axis Y-Y.

The movement of relative approach between gripping members 4, 5, 6 brings about centering of frame 30 regardless of the position adopted by frame 30 with respect to gripping members 4, 5, 6 themselves. In fact, regardless of whichever is the first of gripping members 4, 5, 6 to "come into contact" with frame 30, frame 30 is moved into a predetermined position with respect to gripping members 4, 5, 6 when such members 4, 5, 6 are in the proximal gripping position.

In the context of a machine for the cleaning of weld beads, device 1 can be used to grip frame 30 and rotate frame 30 in such a way that all the corners of the frame are presented to the weld bead cleaning station in succession. Through device 1 the position of frame 30 with respect to gripping means 3, that is the position of the corner of frame 30 against which gripping means 3 are tightened, is determined unequivocally.

In order to bring about relative movement of gripping members 4, 5, 6 device 1 may be equipped with motion coupling means 12 which can kinematically connect first gripping member 4 with second and third gripping members 5 and 6. In this case actuating means 7 act on first gripping member 4 and the movement of first gripping member 4 is transferred to gripping members 5, 6 through such motion coupling means 12.

Motion coupling means 12 therefore synchronise movement of gripping member 4 with gripping members 5 and 6.

In the example illustrated in the appended figures, actuating means 7 comprise a drive motor acting on gripping member 4 to move gripping member 4 between the retracted and drawn positions. Motion coupling means 12 comprise a rack unit kinematically coupled with gripping members 4, 5 and 6 to transfer a motion induced by drive motor 7 on gripping member 4 through gripping members 5 and 6.

As mentioned, actuating means 8 are designed to rotate gripping means 3 with respect to base body 2. In particular, when gripping means 3 grip frame 30, frame 30 can be rotated about the Y-Y rotation axis and suitably orientated with respect to base body 2, for example in order to present angles or corners 35, 37 of frame 30 to a weld bead cleaning machine in succession.

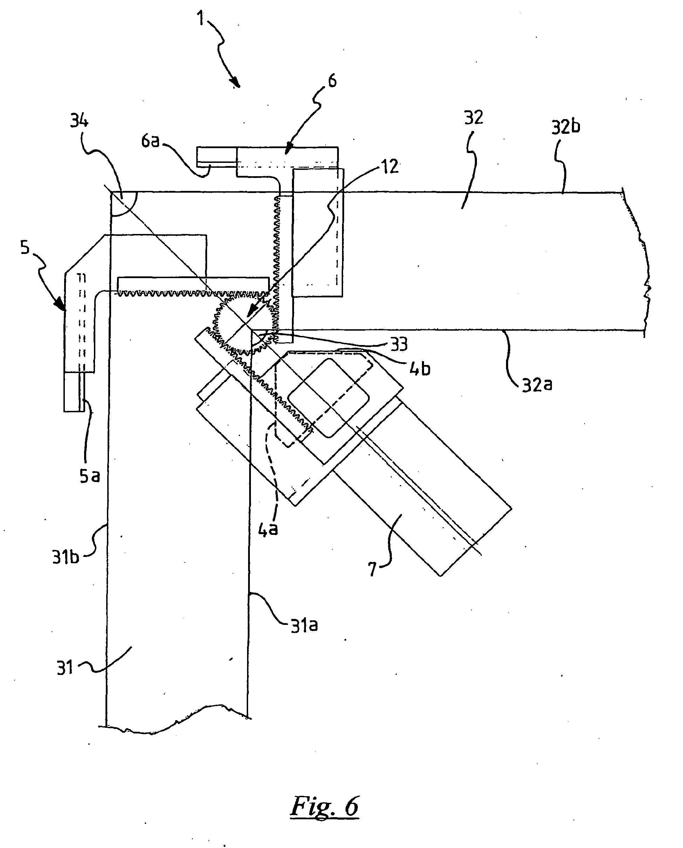

Figure 6 shows diagrammatically the various stages of seizing, rotating and preparing for processing a frame 30 gripped at one corner by gripping means 3 and rotated through 90 degrees about the Y-Y rotation axis through actuating means 8 of device 1 according to this invention for processing.

Actuating means 8 may for example be a motor and reduction gear of the brushless type or a pneumatically operated piston.

Advantageously base body 2 is movably supported by guide means 10 in a vertical direction parallel to the Y-Y rotation axis indicated by B-B in Figure 5. Actuating means 9 are provided for vertical movement of base body 2.

When in operation drive motor 7 activates gripping member 4 and through rack unit 12 activates gripping members 5 and 6 in a synchronised way to move such gripping members 4, 5, 6 from the distal position to the proximal position to grip frame 30.

In the example illustrated in the appended figures gripping members 4, 5, 6 grip frame 30 at corner 35.

In order to rotate frame 30 about the Y-Y rotation axis actuating means 8 are activated so as to present the subsequent corner of frame 30 to the weld bead cleaning machine.

At this point gripping means 4, 5, 6 are moved into the distal position to release frame 30 and device 1 is moved vertically in the B-B direction by actuating means and returns to the initial loading position.

In a manner which is in itself known automatic control means (not illustrated in the figures) which control the operation of the actuating means of device 1 are provided to carry out the operations of gripping, rotating and moving device 1 and frame 30 when gripping means 30 are in a gripping position on frame 30.

As may be seen from what has been described, the device according to the invention makes it possible to satisfy the requirements mentioned in the introduction to this description and to overcome the disadvantages of the control devices in the known art.

In particular, thanks to the device according to the invention it is possible to grip a frame and centre it with respect to the gripping means.

Obviously in order to satisfy contingent and specific requirements a person skilled in the art could apply any modifications and variants to the device according to the invention described above, all of which however lie within the scope of protection of the invention as defined by the following claims.

## Claims

1. Device (1) for gripping and moving a workpiece (30), said workpiece (30) comprising at least a first member (31) and a second member (32) connected together at an angle and each having an inner side (31a,32a) and an outer side (31b,32b), the inner sides (31a, 32a) and the outer sides (31, 32b) of said first (31) and second (32) members respectively forming an internal angle (33) and an external angle (34) lying in a same plane (A), said device (1) comprising:
- a base body (2),
- gripping means (3) mounted to rotate with respect to said base body (2) about a rotation axis (Y-Y) extending perpendicularly to said plane (A), said gripping means (3) being able to move mutually between a proximal gripping position in which they grip said workpiece (30) and a distal position in which they disengage from said workpiece (30),
- first actuating means (7) to actuate said gripping means (3) between said proximal position and said distal position,
- second actuating means (8) to rotate said gripping means (3) with respect to said base body (2) about said axis (Y-Y),
wherein said gripping means (3) comprise a first (4), a second (5) and a third (6) gripping member which can move from the distal position to the proximal position to abut against the workpiece (30),
**characterized in that**
- said first gripping member (4) comprises a body having a frustoconical cross-section with a first lateral surface (4a) and a second lateral surface (4b) capable of abutting, in the proximal position, at least partly respectively against the inner side (31a) of the first member (31) and against the inner side (32a) of the second member (32) of the workpiece (30),
- said second gripping member (5) and said third gripping member (6) are movable from the distal position to the proximal position to abut, in the proximal position, against the outer side (31b) of said first member (31) and against the outer side (32b) of said second member (32) respectively,
- said first, second and third gripping members (4, 5, 6) act on said first (31) and second (32) members of the workpiece (30) so that said workpiece (30) can be gripped and centred with respect to said base body (2).

2. Device (1) according to claim 1, in which, in the proximal position, said first gripping member (4) abuts against the inner sides (31a, 32a) of the first and second members (31, 32) of the workpiece (30) at said internal angle (33).

3. Device (1) according to claim 1 or 2 in which, in the proximal position, said second gripping member (5) and said third gripping member (6) abut respectively against the outer side (31b) of said first member (31) and against the outer side (32b) of said second member (32) at said external angle (34).

4. Device (1) according to any one of claims 1 to 3, in which said second gripping member (5) and said third gripping member (6) each constitute a jaw extending mainly in a direction parallel to said rotation axis (Y-Y) and can move towards and away from said first gripping member (4) along a direction perpendicular to the direction of said rotation axis (Y-Y).

5. Device (1) according to any one of claims 1 to 4, comprising motion coupling means (12) capable of kinematically connecting said first gripping member (4) with said second and third gripping member (5, 6), said actuating means (7) acting on said first gripping member (4), the movement of said first gripping member (4) being transferred to said second and third gripping members (5, 6) through said motion coupling means (12).

6. Device (1) according to any one of claims 1 to 5, in which said base body (2) is intended to be movably supported by guide means (20) in a direction perpendicular to the direction of said rotation axis (Y-Y).

7. Device (1) according to any one of claims 1 to 6, in which said base body (2) is intended to be movably supported by guide means (10) in a direction (B-B) parallel to said rotation axis (Y-Y).

8. Device (1) according to any one of claims 1 to 7, in which said second actuating means (8) rotate said gripping means (3) with respect to said base body (2) when said gripping means grip said workpiece (30) so that said workpiece can be rotated with respect to said base body (2).

9. Device (1) according to any one of claims 1 to 8, in which said workpiece (30) comprises a third member (36) connected at an angle (37) to one of said members (31,32), the areas of connection of said members (31,32,36) forming corresponding corners (35,37), said second actuating means (8) rotating said gripping means (3) with respect to said base body (2) when said gripping means (3) grip said workpiece (30) in order that said corners (35, 37) can be offered up in succession to a weld bead cleaning machine.

## Patentansprüche

1. Vorrichtung (1) zum Greifen und Bewegen eines Werkstücks (30), wobei das Werkstück (30) mindestens ein erstes Teil (31) und ein zweites Teil (32) umfasst, die zusammen an einem Winkel verbunden sind und jeweils eine innere Seite (31a, 32a) und eine äußere Seite (31b, 32b) haben, wobei die inneren Seiten (31a, 32a) und die äußeren Seiten (31b, 32b) des ersten (31) bzw. zweiten (32) Teils einen internen Winkel (33) und einen externen Winkel (34) bilden, die in der selben Ebene (A) liegen, wobei die Vorrichtung (1) umfasst:
- einen Grundkörper (2),
- Greifmittel (3) so montiert, dass es in Bezug auf den Grundkörper (2) um eine Rotationsachse (Y-Y) rotiert, die sich senkrecht zur Ebene (A) erstreckt, wobei das Greifmittel (3) fähig ist sich zwischen einer proximalen Greifposition, in der es das Werkstück (30) greift, und einer distalen Position, in der es das Werkstück (30) loslässt, wechselseitig zu bewegen,
- erstes Betätigungsmittel (7) zur Betätigung des Greifmittels (3) zwischen der proximalen Position und der distalen Position,
- zweites Betätigungsmittel (8) zur Rotation des Greifmittels (3) in Bezug auf den Grundkörper (2) um die Achse (Y-Y),
- wobei das Greifmittel (3) ein erstes (4), ein zweites (5) und ein drittes (6) Greifglied umfasst, das sich von der distalen Position zur proximalen Position zum Anliegen an das Werkstück (30) bewegen kann,
**dadurch gekennzeichnet, dass**
- das erste Greifglied (4) einen Körper umfasst, der einen kegelstumpfförmigen Querschnitt mit einer ersten lateralen Oberfläche (4a) und einer zweiten lateralen Oberfläche (4b) hat, und in der proximalen Position zum Anliegen in der Lage ist, zumindest teilweise in Bezug auf die innere Seite (31a) des ersten Teils (31) beziehungsweise auf die innere Seite (32a) des zweiten Teils (32) des Werkstücks (30),
- das zweite Greifglied (5) und das dritte Greifglied (6) von der distalen Position zur proximalen Position beweglich sind, um in der proximalen Position, an die äußere Seite (31b) des ersten Teils (31) beziehungsweise an die äußere Seite (32b) des zweiten Teils (32), anzulegen
- das erste, zweite und dritte Greifglied (4, 5, 6) auf das erste (31) und zweite (32) Teil des Werkstücks (30) wirken, sodass das Werkstück (30) gegriffen und in Bezug auf den Grundkörper (2) zentriert werden kann.

2. Vorrichtung (1) nach Anspruch 1, in der, in der proximalen Position das erste Greifglied (4) an den inneren Seiten (31a, 32a) des ersten und zweiten Teils (31, 32) des Werkstücks (30) am internen Winkel (33) anliegt.

3. Vorrichtung (1) nach Anspruch 1 oder 2, in der, in der proximalen Position das zweite Greifglied (5) und das dritte Greifglied (6) in Bezug auf die äußere Seite (31b) des ersten Teils (31) und auf die äußere Seite (32b) des zweiten Teils (32) am externen Winkel (34) anliegt.

4. Vorrichtung (1) nach einem der Ansprüche 1 bis 3, in der das zweite Greifglied (5) und das dritte Greifglied (6) jeweils eine Greifbacke bilden, die sich hauptsächlich in eine Richtung parallel zur Rotationsachse (Y-Y) erstreckt und zum ersten Greifglied (4) entlang einer Richtung, die senkrecht zur Richtung der Rotationsachse (Y-Y) liegt, sich hin und davon wieder wegbewegen kann.

5. Vorrichtung (1) nach einem der Ansprüche 1 bis 4, umfassend ein Bewegungskopplungsmittel (12), das fähig ist kinematisch das erste Greifglied (4) mit dem zweiten und dritten Greifglied (5, 6) zu verbinden, wobei das Betätigungsmittel (7) auf das erste Greifglied (4) wirkt, wobei die Bewegung des ersten Greifglieds (4) zum zweiten und dritten Greifglied (5, 6) durch das Bewegungskopplungsmittel (12) übertragen wird.

6. Vorrichtung (1) nach einem der Ansprüche 1 bis 5, in der der Grundkörper (2) vorgesehen ist in einer Richtung, die senkrecht zur Richtung der Rotationsachse (Y-Y) ist, in der Bewegung von einem Führungsmittel (20) unterstützt zu werden.

7. Vorrichtung (1) nach einem der Ansprüche 1 bis 6, in der der Grundkörper (2) vorgesehen ist in einer Richtung (B-B), die parallel zur Rotationsachse (Y-Y) ist, bei der Bewegung durch Führungsmittel (10) unterstützt zu werden.

8. Vorrichtung (1) nach einem der Ansprüche 1 bis 7, in der das zweite Betätigungsmittel (8) das Greifmittel (3) in Bezug auf den Grundkörper (2) dreht, wenn das Greifmittel das Werkstück (30) greift, sodass das Werkstück in Bezug auf den Grundkörper (2) gedreht werden kann.

9. Vorrichtung (1) nach einem der Ansprüche 1 bis 8, in der das Werkstück (30) ein drittes Teil (36) umfasst, das in einem Winkel (37) zu einem der Teile (31, 32) verbunden ist, wobei die Bereiche der Verbindung der Teile (31, 32, 36) korrespondierende Ecken (35, 37) bilden, wobei das zweite Betätigungsmittel (8) das Greifmittel (3) in Bezug auf den Grundkörper (2) dreht, wenn das Greifmittel (3) das Werkstück (30) greift, damit die Ecken (35, 37) in Nachfolge zu einer Schweißraupen-Säuberungsmaschine angesetzt werden können.

## Revendications

1. Dispositif (1) pour saisir et déplacer une pièce de fabrication (30), ladite pièce de fabrication (30) comprenant au moins un premier élément (31) et un deuxième élément (32) reliés l'un à l'autre selon un angle et comportant chacun un côté intérieur (31a, 32a) et un côté extérieur (31b, 32b), les côtés intérieurs (31a, 32a) et les côtés extérieurs (31, 32b) desdits premier (31) et deuxième (32) éléments formant respectivement un angle interne (33) et un angle externe (34) se trouvant dans un même plan (A), ledit dispositif (1) comprenant :
- un corps de base (2),
- des moyens de préhension (3) montés pour tourner par rapport audit corps de base (2) autour d'un axe de rotation (Y-Y) s'étendant perpendiculairement audit plan (A), lesdits moyens de préhension (3) étant capables de se déplacer mutuellement entre une position de préhension proximale à laquelle ils saisissent ladite pièce de fabrication (30) et une position distale à laquelle ils se séparent de ladite pièce de fabrication (30),
- des premiers moyens d'actionnement (7) pour actionner lesdits moyens de préhension (3) entre ladite position proximale et ladite position distale,
- des deuxièmes moyens d'actionnement (8) pour faire tourner lesdits moyens de préhension (3) par rapport audit corps de base (2) autour dudit axe (Y-Y),
dans lequel lesdits moyens de préhension (3) comprennent un premier (4), un deuxième (5) et un troisième (6) élément de préhension qui peuvent se déplacer de la position distale vers la position proximale pour venir en butée contre la pièce de fabrication (30),
**caractérisé en ce que**
- ledit premier élément de préhension (4) comprend un corps ayant une section transversale conique tronquée avec une première surface latérale (4a) et une deuxième surface latérale (4b) capables de venir en butée, à la position proximale, au moins partiellement respectivement contre le côté intérieur (31a) du premier élément (31) et contre le côté intérieur (32a) du deuxième élément (32) de la pièce de fabrication (30),
- ledit deuxième élément de préhension (5) et ledit troisième élément de préhension (6) peuvent être déplacés de la position distale vers la position proximale pour venir en butée, à la position proximale, contre le côté extérieur (31b) dudit premier élément (31) et contre le côté extérieur (32b) dudit deuxième élément (32), respectivement,
- lesdits premier, deuxième et troisième éléments de préhension (4, 5, 6) agissent sur lesdits premier (31) et deuxième (32) éléments de la pièce de fabrication (30) de sorte que ladite pièce de fabrication (30) puisse être saisie et centrée par rapport audit corps de base (2).

2. Dispositif (1) selon la revendication 1, dans lequel, à la position proximale, ledit premier élément de préhension (4) est en butée contre les côtés intérieurs (31a, 32a) des premier et deuxième éléments (31, 32) de la pièce de fabrication (30) selon ledit angle interne (33).

3. Dispositif (1) selon la revendication 1 ou 2, dans lequel, à la position proximale, ledit deuxième élément de préhension (5) et ledit troisième élément de préhension (6) sont respectivement en butée contre le côté extérieur (31b) dudit premier élément (31) et contre le côté extérieur (32b) dudit deuxième élément (32) selon ledit angle externe (34).

4. Dispositif (1) selon l'une quelconque des revendications 1 à 3, dans lequel ledit deuxième élément de préhension (5) et ledit troisième élément de préhension (6) constituent chacun une mâchoire s'étendant principalement dans une direction parallèle audit axe de rotation (Y-Y) et peuvent se rapprocher et s'éloigner dudit premier élément de préhension (4) le long d'une direction perpendiculaire à la direction dudit axe de rotation (Y-Y).

5. Dispositif (1) selon l'une quelconque des revendications 1 à 4, comprenant des moyens de couplage de mouvements (12) capables de relier cinématiquement ledit premier élément de préhension (4) auxdits deuxième et troisième éléments de préhension (5, 6), lesdits moyens d'actionnement (7) agissant sur ledit premier élément de préhension (4), le mouvement dudit premier élément de préhension (4) étant transféré auxdits deuxième et troisième éléments de préhension (5, 6) par l'intermédiaire desdits moyens de couplage de mouvements (12).

6. Dispositif (1) selon l'une quelconque des revendications 1 à 5, dans lequel ledit corps de base (2) est destiné à être supporté de manière mobile par des moyens de guidage (20) dans une direction perpendiculaire à la direction dudit axe de rotation (Y-Y).

7. Dispositif (1) selon l'une quelconque des revendications 1 à 6, dans lequel ledit corps de base (2) est destiné à être supporté de manière mobile par des moyens de guidage (10) dans une direction (B-B) parallèle audit axe de rotation (Y-Y).

8. Dispositif (1) selon l'une quelconque des revendications 1 à 7, dans lequel lesdits deuxièmes moyens d'actionnement (8) font tourner lesdits moyens de préhension (3) par rapport audit corps de base (2) lorsque lesdits moyens de préhension saisissent ladite pièce de fabrication (30) de sorte que ladite pièce de fabrication puisse être tournée par rapport audit corps de base (2).

9. Dispositif (1) selon l'une quelconque des revendications 1 à 8, dans lequel ladite pièce de fabrication (30) comprend un troisième élément (36) relié selon un angle (37) à l'un desdits éléments (31, 32), les zones de liaison desdits éléments (31, 32, 36) formant des coins (35, 37) correspondants, lesdits deuxièmes moyens d'actionnement (8) faisant tourner lesdits moyens de préhension (3) par rapport audit corps de base (2) lorsque lesdits moyens de préhension (3) saisissent ladite pièce de fabrication (30) afin que lesdits coins (35, 37) puissent être présentés successivement à une machine de nettoyage de bille de soudure.
